(19) Europäisches Patentamt
European Patent Office
Office européen des brevets

(11) **EP 1 699 149 B1**

(12) **EUROPEAN PATENT SPECIFICATION**

(45) Date of publication and mention
of the grant of the patent:
**10.04.2013 Bulletin 2013/15**

(51) Int Cl.:
**H04B 10/2581** *(2013.01)*

(21) Application number: **06075326.6**

(22) Date of filing: **10.02.2006**

(54) **A method for the use of a local area fibre optic network for data communication at a bit rate of at least 30 Gbps, a method for adapting a fibre optic network as well as a fibre optic network**

Verfahren zur Verwendung eines lokalen faseroptischen Netzwerks zur Datenübertragung mit einer Bitrate von wenigstens 30 Gbps, Verfahren zur Anpassung eines faseroptischen Netzwerks und faseroptisches Netzwerk

Méthode d'utilisation d'un réseau local à fibres optiques pour la communication de données à un débit d'au moins 30 Gbps, méthode pour adapter un réseau à fibres optiques ainsi qu'un réseau à fibres optiques

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.03.2005 NL 1028456**

(43) Date of publication of application:
**06.09.2006 Bulletin 2006/36**

(73) Proprietor: **Draka Comteq B.V.**
**1083 HJ Amsterdam (NL)**

(72) Inventors:
• **Matthijsse, Pieter**
**5522 AA Hapert (NL)**
• **Kuyt, Gerard**
**5283 CS Boxtel (NL)**

(74) Representative: **Dohmen, Johannes Maria Gerardus et al**
**Algemeen Octrooi- en Merkenbureau**
**P.O. Box 645**
**5600 AP Eindhoven (NL)**

(56) References cited:
• **PEPELJUGOSKI P ET AL: "DEVELOPMENT OF SYSTEM SPECIFICATION FOR LASER-OPTIMIZED 50-MUM MULTIMODE FIBER FOR MULTIGIGABIT SHORT-WAVELENGTH LANS" JOURNAL OF LIGHTWAVE TECHNOLOGY, IEEE SERVICE CENTER, NEW YORK, NY, US, vol. 21, no. 5, May 2003 (2003-05), pages 1256-1275, XP001230539 ISSN: 0733-8724**
• **DÜSER M ET AL: "2.5 Gbit/s transmission over 4.5 km of 62.5 µm multimode fibre using centre launch technique" ELECTRONICS LETTERS, IEE STEVENAGE, GB, vol. 36, no. 1, 6 January 2000 (2000-01-06), pages 57-58, XP006014668 ISSN: 0013-5194**
• **HAO LIU ET AL: "Electronic dispersion compensation for 10 Gbps data transmission over multi-mode fibers" IMPLEMENTATION OF HIGH PERFORMANCE CIRCUITS, 2004. (DCAS-04). PROCEEDINGS OF THE 2004 IEEE DALLAS/CAS WORKSHOP RICHARDSON, TX, USA 27 SEPT. 2004, PISCATAWAY, NJ, USA, IEEE, US, 2004, pages 159-162, XP010742943 ISBN: 0-7803-8713-9**

EP 1 699 149 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field of the invention

The present invention relates to a method for the use of a local area fibre optic network for enabling data communication, comprising the steps of supplying an intensity-modulated light signal to at least one fibre of the fibre optic network by means of a transmission unit and receiving the intensity-modulated light signal by means of the receiver unit that is connected to the fibre, wherein the intensity of the intensity-modulated light signal is modulated for the purpose of providing a bit rate of at least 30 Gbps for the data communication.

The invention further relates to a method for altering a 10 Gigabit ethernet fibre optic network for a limited working area for the purpose of adapting the fibre optic network for data communication at a bit rate in excess of 30 Gbps.

The invention further relates to a fibre optic network for data communication at a bit rate of at least 30 Gbps.

Background of the invention

The demand for high bit rates in modern data communication networks has led to the use of optical communication systems with serial bit rates of up to 10 Gbps in the vertical "backbone". So far, the "horizontal" part of a corporate network, this is the fanout from the vertical backbone to the various user terminals on a particular floor level, has usually been realised by means of pairs of copper cores suitable for radiofrequency transmission. As a result of ongoing developments to as much as 10 Gbps over short lengths of copper wire, but also as a result of the use of optical connections in this horizontal part, there is an increasing demand for a larger transmission capacities in the vertical part of the corporate network.

In view of the growing demand for larger transmission capacities, there is an increasing need for local area fibre optic networks (LAN) by means of which bit rates in excess of 10 Gbps can be realised.

The technology of current optical corporate networks is mainly based on the use of graded-index multimode fibre (mmf) and 850 nm lasers (VCSEL). A problem that occurs specifically with multimode fibres is modal dispersion. Light that propagates through the fibre can reach the other end of the fibre via several paths. Each path has its own optical path length, and the difference in optical path lengths between various paths can lead to pulse widening upon propagation of a light pulse through the fibre. A measure for the optical fibre quality with regard to the occurrence of modal dispersion is the (wavelength dependent) modal bandwidth. The problem of modal dispersion is relatively small when fibres having a large modal bandwidth are used, and as a result, the extent of pulse widening will be smaller.

The multimode fibres are optimised for use with a wavelength of 850 nm, which implies that the modal bandwidth is still very high at that wavelength. For a 10 Gigabit ethernet LAN in which distances of 300 m are bridged, the required modal bandwidth of the fibre must be 2000 Mhz.km, for example. The modal bandwidth for different wavelengths is much lower in that case, so that the extent of pulse widening for light pulses of light with a different wavelength is greater. The extent of pulse widening depends on the distance covered by the fibre. For a network consisting of fibres having a specific maximum length, the maximally attainable bit rate depends on the modal bandwidth of the fibres that are used. If the modal bandwidth is too small, too much pulse widening will occur over the maximum distance to be covered, so that the bits transmitted by a transmission unit cannot be distinguished from each other at the receiver end.

The modal bandwidth of the fibre determines the pulse widening per unit distance of a light pulse being transmitted through the fibre. As a result, the modal bandwidth of the fibre determines what maximum distance can be bridged at what bit rate via the fibre, so that a signal that is still recognisable will be received at the output. Since a fibre is optimised for light of a given wavelength, and the modal bandwidth is wavelength-dependent, each fibre has a maximum modal bandwidth for a specific selected wavelength of the light.

Conventional optical corporate networks are usually based on graded-index multimode fibres that are optimised for use with light having a wavelength of 850 nm. For this wavelength and at a transmission rate of 10 Gbps, the fibres have a modal bandwidth which approximately equals 2000 Mhz.km. With such a rate it can be calculated that a maximum distance of around 300 m can be bridged. This is sufficient for most corporate networks. However, if larger distances are to be bridged (for example 550 m), a much larger modal bandwidth is required (5000 MHz.km). This is also true when the bit rate of the network is to be increased, for example to a value of 40 Gbps, because more stringent requirements as regards the pulse widening are made in that case. When the capacity of an existing corporate network wherein, for example the network was designed for a bit rate of 10 Gbps and light having a wavelength of 850 nm, is to be increased such that the fibres that are used for said light have a modal bandwidth of 2000 Mhz.km, either the entire fibre optic network must be replaced or fibre has to be added to the network so as to double or triple the capacity, for example.

Consequently, increasing the transmission capacity of an existing corporate network is not easy, usually it is a costly affair. If it is decided to replace the fibre optic network , the existing fibre must be written off prematurely.

Hao Liu et. al. in "Electronic Dispersion Compensation for 10 Gbps data transmission over multi-mode fibers", Implementation of High Performance Circuits, Proceedings of the 2004 IEEE Dallas/CAS workshop, Richardson, TX, USA, 27 September 2004, pages 159-162, disclose using finite impulse response (FIR) filtering in Electronic Dispersion Compensation (EDC) for enabling 10 Gbps data communication with, amongst others, a 1300 nm optical signal.

M. Düser and P. Bayvel, in "2.5 Gbit/s transmission over 4.5 km of 62.5 $\mu$m multimode fibre using center launch technique", Electronics Letters, IEE stevenage, GB, vol. 36, no. 1, 6 January 2000, pages 57 and 58, disclose non-return-to-zero (NRZ) transmission at 2.5 Gbps and with a 1300 nm optical signal over a link length of 4.5 km using a center launch technique.

P. Pepeljugoski et. al., in "Development of System Specification for Laser-Optimized 50-$\mu$m Multimode Fibre for Multigigabit Short-Wavelength LANs", Journal of Lightwave Technology, IEEE service center, New York, NY, USA, vol. 21, no. 5, May 2003, pages 1256-1275, XP001230539, documents the TIA Working Group in developing the specifications for multimode fibre for 10 Gbps communication, proposing six templates for fibre types. It particularly describes that the fibre profile may be optimized for optimal performance at specific wavelengths.

Summary of the invention

It is an object of the present invention to provide a method which makes it possible to upgrade the transmission rate of existing local area fibre optic networks (LAN) without having to replace the fibre optic network.

In order to achieve this object, the invention provides a method of use of a local area fibre optic network for enabling data communication, comprising the steps of supplying an intensity-modulated light signal to at least one fibre of said fibre optic network by means of a transmission unit and receiving the intensity-modulated light signal by means of a receiver unit that is connected to said fibre, wherein the intensity of the intensity-modulated light signal is modulated for the purpose of providing a bit rate of at least 30 Gbps for said data communication, characterized in that, light for providing the intensity-modulated light signal comprises a wavelength between 1200 nm and 1400 nm, and wherein the light as an optical power such that pulse widening caused by modal dispersion in the fibre is compensated.

It is a well-known fact that the safety requirements to be observed when designing fibre optic networks are much less stringent for light with longer wavelengths. According to the safety requirements, light with a wavelength of for example 1300 nm have is allowed to a much larger optical power than light with a wavelength of 850 nm; the difference being as much as 13 dB. A higher optical power is equivalent with a stronger optical signal.

Furthermore, the energy per photon of light with a wavelength between 1200 and 1400 nm is much lower than that of light with a smaller wavelength, for example 850 nm. When light with a wavelength of 1300 nm is received by a detector, a larger electrical current will be provided, in view of the larger number of photons, than in the situation in which light with a wavelength of 850 nm having the same optical power falls on the same detector. Consequently, the sensitivity of the detector to light with a wavelength of 1300 nm is higher than to light with a wavelength of 850 nm. The difference is about 1.5 dB for the aforesaid wavelengths.

A further improvement of the power output when using light with a wavelength of 1200 to 1400 nm in a conventional fibre optic network, such as a Local Area Network (LAN), is achieved as a result of the improved properties of the fibre as regards attenuation at greater wavelengths. For a wavelength of 850 nm, the attenuation is approximately 2.5 dB per kilometre, whilst the attenuation factor for the same fibre with a wavelength of 1300 nm is 0.7 dB per kilometre. For a wavelength of 1550 nm, for example, the attenuation factor will be even smaller, amounting to 0.4 dB per kilometre. In the case of a fibre length of 300 m, the power output for a wavelength of 1300 nm will improve by a factor of 0.6 db in comparison with the same fibre with a wavelength of 850 nm.

As a result of the above effects, when a wavelength of 1300 nm is used, the power output on the receiver side in a fibre optic network will be a total of 15.1 dB larger than when light with a wavelength of 850 nm is used for providing an intensity-modulated light signal for digital data transmission. On the other hand, when the transmission rate or bit rate of the network increases by a factor 4, the signal-to-noise ratio (SNR) will likewise increase by a factor 4 (6 dB). The pulse widening that has occurred at the receiver end must never exceed 25% at any time. Since the power output at the receiver end has increased by 15.1 dB, whereas only 6 dB is required for the signal-noise ratio, there is a surplus of 9.1 dB on the power balance. Said surplus can be utilised for compensating the additional pulse widening resulting from the use of light with a wavelength of 1300 nm in fibres optimised for a wavelength of 850 nm, for example, as will be elaborated by way of example below.

In a fibre optic network with a bit rate of 10 Gbps, in which data communication takes place by means of intensity-modulated light signals on the basis of light with a wavelength of 850 nm, the requirement is that the minimum or the effective modal bandwidth (EMB) of the fibre must be at least 200 Mhz.km in order to bridge a distance of 300 m (for a distance of 150 m the required bandwidth is 900 Mhz.km and for a distance of 550 m it is about 4700 Mhz.km). The pulse widening of the 10 Gbps signal that occurs per bit can be calculated by means of the following equation:

$$\sigma_{RMS} = 0.187 * (length/modal\ bandwidth) \qquad (eq.\ 1)$$

wherein $\sigma_{RMS}$ is the pulse widening for a specific distance calculated on the basis of the pulse response of the fibre. On the basis of this equation, the pulse widening is 28 ps with an effective modal bandwidth of 2000 Mhz.km and a fibre having a length of 300 m (for 150 m and 900 Mhz.km said value is 31 ps and for 550 m and 4700 Mhz.km said value is 22 ps).

Consequently, the pulse widening for a signal having a bit rate of 10 Gbps is 20 to 30% in the above cases. This is allowable for a good system design. However, if the bit rate of the signal is increased to 40 Gbps, and the length of a bit is 25 ps, therefore, the above fictive modal bandwidths are not anywhere sufficient to guarantee a pulse widening of 20 to 30% as described above. Calculating back with the new bit rate of 40 Gbps, and based on the same pulse widening percentages at 150, 300 and 550 m (31%, 28% and 22%, respectively), the effective modal bandwidth is about 3600 Mhz.km with a distance of 150 m, about 8000 MHz.km with a distance of 300 m and about 18800 Mhz.km with a distance of 550m.

However, it is possible to partially compensate the pulse widening in the fibre by increasing the optical power of the laser as described above. In the case of a 3 dB power increase, a pulse widening of about 60% can be sufficiently compensated. In accordance with a preferred embodiment it is possible, therefore, to select the laser power such that an optical signal, which is recognizable by the receiver unit, is provided. The optical laser power that is used preferably ranges between -6 dBm and +6 dBm, although different values may be used, if desired.

If a pulse widening of about 60% can be compensated, the implication as regards the system requirements is that the effective modal bandwidth only needs to be about 400 Mhz.km with a distance of 300 m, with a distance of 150 m this value is only about 1800 Mhz.km. For a wavelength of 1300 nm such values can readily be attained with existing fibres.

If a fibre having an effective modal bandwidth of 2000 Mhz.km with a wavelength of 850 nm and an effective modal bandwidth of about 4000 Mhz.km with a wavelength of 1300 nm is used for providing local area fibre optic networks (LAN), a fibre optic network can be provided that is capable of supporting a bit rate of 10 Gbps with a wavelength of 850 nm. Moreover, such a fibre optic network can easily be upgraded to enable data communication at a bit rate of 40 Gbps by adapting the transmission unit and the receiver unit for providing and processing an intensity-modulated light signal based on light with a wavelength of about 1200 to 1400 nm, in particular about 1300 nm.

Further improvements of such a system can be achieved by means of so-called electronic dispersion compensation (EDC). To that end a filter is used in the receiver, for example after the pre-amplification step, whose transfer function is the inverse of the transfer function of the fibre. Said filter compensates the pulse widening caused by modal dispersion, so that less stringent requirements need to be made with regard to the effective modal bandwidth of the fibre. Thus it even becomes possible to use existing fibre optic networks optimised only for communication by means of an intensity-modulated light signal based on light with a wavelength of 850 nm for data communication at a bit rate of 40 Gbps, by using the electronic dispersion compensation in combination with, for example, a 1300 nm laser having sufficient power. Existing corporate networks may in that case be adapted for data communication at a bit rate of 40 Gbps without there being a need to replace the fibre optic network .

A second aspect of the invention provides a method for altering a 10 Gigabit ethernet local area fibre optic network for the purpose of adapting said fibre optic network for data communication at a bit rate of at least 30 Gbps, comprising the steps of providing a transmission unit connected to a fibre of said network for producing an intensity-modulated light signal comprising light having a wavelength between 1200 nm and 1400 nm and an optical power such that pulse widening caused by modal dispersion in the fibre is compensable, and providing a receiver unit for receiving and processing the intensity-modulated light signal.

The phrase "providing a transmission unit connected to a fibre of the network" is understood to mean both the complete replacement of existing equipment by new equipment, as well as the replacement of only a few pars of the existing equipment. The same applies with regard to the provision of a receiver unit for receiving and processing the intensity-modulated light signal.

According to a third aspect, the invention provides a fibre optic network for data communication at a bit rate of at least 30 Gbps, comprising a transmission unit which is arranged for providing an intensity-modulated light signal comprising light having a wavelength between 1200 nm and 1400 nm and an optical power such that pulse widening caused by modal dispersion in the fibre is compensable, at least one fibre connected to said transmission unit for transmitting the intensity-modulated light signal and a receiver unit for receiving and processing the intensity-modulated light signal.

The invention will now be explained by means of a description of embodiments thereof which are not meant to be limiting on the invention, in which reference is made to the appended drawings, in which:

Figure 1 shows a fibre optic network according to the present invention;

Figure 2 shows a modal bandwidth characteristic for a fibre intended for use in an embodiment of the present invention.

Detailed description of the invention

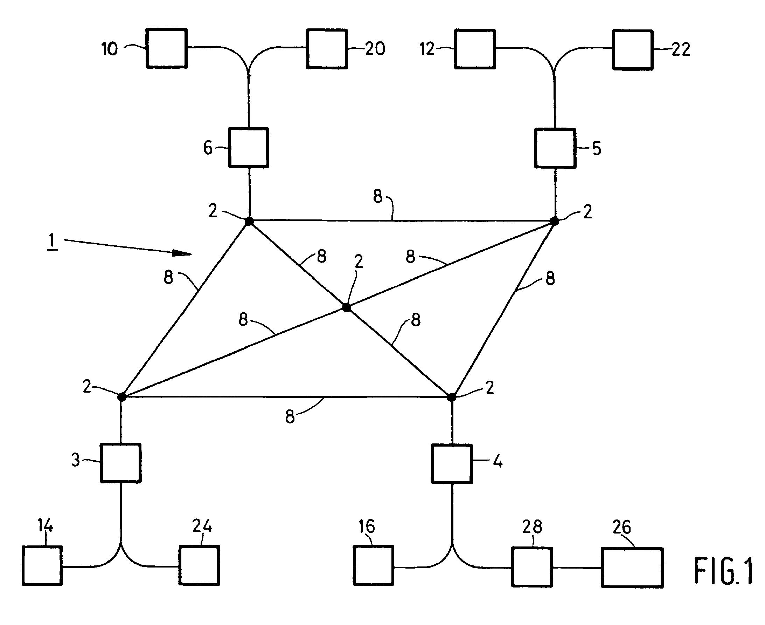

An optical fibre optic network according to the invention is generally indicated at 1 in figure 1. The network consists of a multitude of nodal points 2 connected by means of fibre cables 8. A number of nodal points 2 may be connected to, for example, wavelength division multiplexers (WDM) or routing means (such as "patch panels") indicated at 3, 4, 5 and 6. Arranged behind the WDM's 3, 4, 5 and 6 is transmitter and receiver apparatus. The transmitter apparatus comprises transmission units 10, 12, 14 and 16, for example, whilst the apparatus for receiving the optical signal consists of receiver units 20, 22, 24 and 26.

It should be understood that the transmission units 10, 12, 14 and 16, as well as the receiver units 20, 22, 24 and 26 are typically connected to equipment for the further processing of the optical signals, such as routers, switches, servers and the like.

The transmission units 10 provide intensity-modulated optical signals based on light with a wavelength of, for example, 1300 nm. The light, which is transmitted by the transmission unit 10, for example, may be picked up at another end of the network, for example by the receiver units 22, and be processed further. The operative component for providing the light on which the intensity-modulated light is based consists of a laser device, for example of the VCSEL type.

The bit rate at which the intensity-modulated optical signal is modulated may be 40 Gbps, for example. According to the invention, pulse widening of the 40 Gbps signal to about 50% can be compensated by selecting a sufficiently high value for the power of the transmission units 10, 12, 14 and 16. Starting from said bit rate and the aforesaid pulse widening of 60%, the fibre connections 8 in the fibre optic network 1 must have a modal bandwidth of 4000 Mhz.km with a wavelength of 1300 nm.

According to one embodiment of the present invention, electronic dispersion compensation is used on the receiver side. This is for example shown in figure 1 for the receiver unit 26. The electronic dispersion compensation consists of a filter 28, which may be placed just before the receiver, for example, or be integrated in the receiver unit 26. In figure 1, the filter 28 is shown separate from the receiver 26.

The filter 28 causes the received intensity-modulated optical signal to be convoluted with a mathematical function that is the inverse of the transfer function of the fibre 8. Thus, the pulse widening that has come about in the fibre can be partially or entirely compensated by a filter 28. The use of electronic dispersion compensation, as implemented by means of the filter 28 in figure 1, enables a further relaxation of the requirements made with regard to the modal bandwidth of the fibre 8. Thus it becomes possible to provide a 40 Gigabit Ethernet network, for example in combination with the larger power of a 1300 nm laser, on the basis of a fibre optic network that was originally designed for data communication at a bit rate of 10 Gbps by means of intensity-modulated light signals on the basis of light with a wavelength of 850 nm.

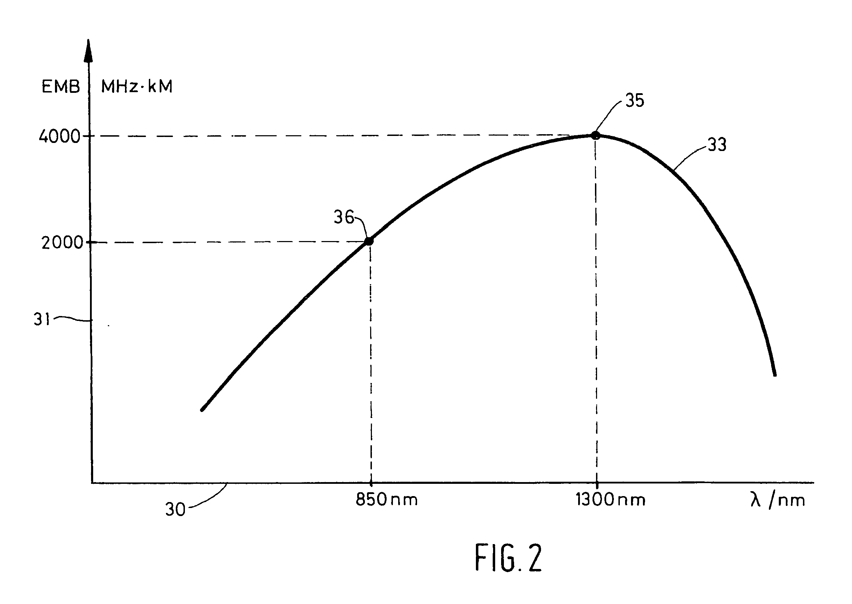

Figure 2 shows by way of example the modal bandwidth characteristic for a fibre that might be used with an embodiment of the present invention. The wavelength λ of the light (in nanometers) is plotted on the horizontal axis 30. The effective modal bandwidth (in Mhz.km) is plotted on the vertical axis 31. The diagram 33 shows the effective modal bandwidth for a fibre in dependence on the wavelength of the optical signal being used for a fibre that is suitable for use in an embodiment of the present invention. Thus, the effective modal bandwidth is about 4000 Mhz.km with a wavelength of 1300 nm. The effective modal bandwidth is about 2000 Mhz.km with a wavelength of 850 nm. If a fibre optic network were to be implemented on the basis of this type of fibre, 10 Gigabit Ethernet transmission with a wavelength of 850 nm would be possible, whilst said network could easily be upgraded in the future to a bit rate of 40 Gbps by adapting the apparatus that is used so that an intensity-modulated light signal with a wavelength of 1300 nm is provided.

The embodiments that are shown in the figures are exclusively intended to illustrate the principle according to the invention. The scope of the invention described herein is limited only by the appended claims. It will be understood that the embodiments as shown and described herein are by no means intended to limit the invention.

**Claims**

**1.** A method of use of a local area fibre optic network (1) for enabling data communication, comprising the steps of supplying an intensity-modulated optical signal to at least one graded index multimode fibre (8), optimized at 850 nm of said fibre optic network (1) by means of a transmission unit (10, 12, 14, 16) and receiving the intensity-modulated optical signal by means of a transmission unit (10, 12, 14, 16) that is connected to said fibre (8), wherein said transmission unit (10, 12, 14, 16) modulates the intensity of the intensity-modulated optical signal providing a bit rate of at least 30 Gbps for said data communication, **characterized in that**, light for providing the intensity-modulated optical signal comprises a wavelength between 1200 nm and 1400 nm, and wherein the light has an optical power such that pulse widening caused by modal dispersion in the fibre (8) is partially compensated by the optical power, wherein said optical signal is recognizable by said receiver unit (20, 22, 24, 26).

2. A method according to claim 1, wherein the light for providing the intensity-modulated optical signal has a wavelength between 1280 nm and 1320 nm.

3. A method according to claim 2, wherein said wavelength is substantially 1300 nm.

4. A method according to any one of the preceding claims, wherein the intensity of the intensity-modulated optical signal is modulated for providing a bit rate for said data communication, between 38 Gbps and 42 Gbps.

5. A method according to claim 3, wherein the intensity of the intensity-modulated optical signal is modulated for providing a bit rate for said data communication of substantially 40 Gbps.

6. A method according to any one of the preceding claims, wherein data in the intensity-modulated signal are represented by bits formed by intensity pulses, and therein the intensity-modulated optical signal is converted into an electrical signal after receipt thereof, the method further comprises a step of filtering the electric signal for the purpose of compensating the widening of the intensity pulses.

7. A method according to claim 6, wherein said filtering step comprises a step of convoluting the intensity-modulated light signal optical signal with a mathematical function requirement, which function represent an inverse of a transfer function of said at least one fibre (8).

8. A method according to any one of the preceding claims, wherein the optical power of said light for providing the intensity-modulated optical signal ranges between -6 dBm and + 2dBm.

9. A method according to any one of the preceding claims, wherein the fibre (8) has a modal bandwidth that ranges between 200 MHz.km and 6000 MHz.km.

10. A method for altering a 10 Gigabit ethernet local area fibre optic network (1) for the purpose of adapting said fibre optic network (1) for data communication at a bit rate of at least 30 Gbps, comprising the steps of providing a transmission unit (10, 12, 14, 16) connected to a graded index multimode fibre (8), optimized at 850 nm of said network (1), said transmission unit (10, 12, 14, 16) being arranged for producing an intensity-modulated optical signal, and for modulating the intensity of said optical signal providing said bit rate of at least 30 Gbps for said data communication, and providing a transmission unit (10, 12, 14, 16) for receiving and processing the intensity-modulated optical signal, wherein said transmission unit (10, 12, 14, 16) is arranged for providing said optical signal comprising light having a wavelength between 1200 nm and 1400 nm and an optical power such that pulse widening caused by modal dispersion in the fibre (8) is partially compensable by the optical power, wherein said optical signal is recognizable by said receiver unit (20, 22, 24, 26).

11. A method according to claim 10, wherein providing a transmission unit (10, 12. 14, 16) connected to a fibre (8) of the network (1) comprise adapting a transmission unit (10, 12, 14, 16) that is already connected to the fibre optic network (1).

12. A method according to any one of the claims 10 or 11, further comprising the step of providing a filter corresponding with said transmission unit (10, 12, 14, 16), for interacting therewith, for the purpose of convoluting the intensity-modulated optical signal with a mathematical function, said function representing an inverse of a transfer function of said at least one fibre (8).

13. A fibre optic network (1) for data communication at a bit rate of at least 30 Gbps, comprising a transmission unit (10, 12, 14, 16) which is arranged for providing an intensity-modutated optical signal, and for modulating the intensity of said optical signal for the purpose of providing said bit rate of at least 30 Gbps for said data communication, said network (1) further comprising at least one graded index multimode fibre (8), optimized at 850 nm connected to said transmission unit (10, 12, 14, 16) for transmitting the intensity-modulated optical signal and a transmission unit (10, 12, 14, 16) for receiving and processing the intensity-modulated optical signal, wherein said transmission unit (10, 12, 14, 16) is arranged for providing said optical signal comprising light having a wavelength between 1200 nm and 1400 nm and an optical power such that pulse widening caused by modal dispersion in the fibre (8) is compensable by the output power for recognition by said receiver unit (20, 22, 24, 26).

14. A fibre optic network (1) according to claim 13, further comprising a filter for convoluting the intensity-modulated optical signal with a mathematical function, wherein said function is the inverse of the transfer function of the fibre (8).

**15.** A transmission unit (10, 12, 14, 16) for use with a fibre optic network (1) according to either one of the claims 13 or 14.


**Patentansprüche**

**1.** Verfahren zur Verwendung eines lokalen Lichtwellenleiter-Netzwerks (1) zur Freigabe einer Datenkommunikation, wobei das Verfahren die Schritte umfasst, bei denen ein intensitätsmoduliertes, optisches Signal mittels einer Übertragungseinheit (10, 12, 14, 16) zu mindestens einer auf 850 nm optimierten Multimode-Gradientenfaser (8) des Lichtwellenleiter-Netzwerks (1) gespeist und das intensitätsmodulierte, optische Signal mittels einer mit der Faser (8) verbundenen Übertragungseinheit (10, 12, 14, 16) empfangen wird, wobei die Übertragungseinheit (10, 12, 14, 16) die Intensität des intensitätsmodulierten, optischen Signals moduliert, das eine Bitrate von mindestens 30 Gbps für die Datenkommunikation bereitstellt, **dadurch gekennzeichnet, dass** Licht zur Bereitstellung des intensitätsmodulierten, optischen Signals eine Wellenlänge zwischen 1200 nm und 1400 nm umfasst, wobei das Licht eine solche optische Leistung hat, dass eine durch Modendispersion in der Faser (8) verursachte Impulsverbreiterung teilweise durch die optische Leistung kompensiert wird, wobei das optische Signal von der Empfangseinheit (20, 22, 24, 26) erkannt werden kann.

**2.** Verfahren nach Anspruch 1, bei dem das Licht zur Bereitstellung des intensitätsmodulierten, optischen Signals eine Wellenlänge zwischen 1280 nm und 1320 nm hat.

**3.** Verfahren nach Anspruch 2, bei dem die Wellenlänge im Wesentlichen 1300 nm beträgt.

**4.** Verfahren nach einem der vorhergehenden Ansprüche, bei dem die Intensität des intensitätsmodulierten, optischen Signals moduliert wird, um eine Bitrate zwischen 38 Gbps und 42 Gbps für die Datenkommunikation bereitzustellen.

**5.** Verfahren nach Anspruch 3, bei dem die Intensität des intensitätsmodulierten, optischen Signals moduliert wird, um eine Bitrate von im Wesentlichen 40 Gbps für die Datenkommunikation bereitzustellen.

**6.** Verfahren nach einem der vorhergehenden Ansprüche, bei dem die Daten im intensitätsmodulierten Signal durch Bits, die durch Intensitätsimpulse gebildet sind, dargestellt werden und bei dem das intensitätsmodulierte, optische Signal nach seinem Empfang in ein elektrisches Signal umgewandelt wird, wobei das Verfahren ferner einen Schritt umfasst, bei dem das elektrische Signal gefiltert wird, um die Verbreiterung der Intensitätsimpulse zu kompensieren.

**7.** Verfahren nach Anspruch 6, bei dem der Schritt des Filterns einen Schritt umfasst, bei dem das intensitätsmodulierte, optische Lichtsignal mit einer mathematischen Funktionsanforderung gefaltet wird, wobei die Funktion eine Umkehrfunktion einer Übertragungsfunktion der mindestens einen Faser (8) darstellt.

**8.** Verfahren nach einem der vorhergehenden Ansprüche, bei dem die optische Leistung des Lichts zur Bereitstellung des intensitätsmodulierten, optischen Signals zwischen - 6 dBm und + 2 dBm beträgt.

**9.** Verfahren nach einem der vorhergehenden Ansprüche, bei dem die Faser (8) eine modale Bandbreite hat, die zwischen 200 MHz.km und 6000 MHz.km beträgt.

**10.** Verfahren zum Ändern eines lokalen Ethernet-Lichtwellenleiter-Netzwerks (1) mit 10 Gigabits, um das Lichtwellenleiter-Netzwerk (1) für eine Datenkommunikation bei einer Bitrate von mindestens 30 Gbps anzupassen, wobei das Verfahren die Schritte umfasst, bei denen eine Übertragungseinheit (10, 12, 14, 16) bereitgestellt wird, die mit einer auf 850 nm optimierten Multimode-Gradientenfaser (8) des Netzwerks (1) verbunden ist, wobei die Übertragungseinheit (10, 12, 14, 16) so angeordnet ist, dass sie ein intensitätsmoduliertes, optisches Signal erzeugt und die Intensität des optischen Signals moduliert, das die Bitrate von mindestens 30 Gbps für die Datenkommunikation liefert, und eine Übertragungseinheit (10, 12, 14, 16) zum Empfangen und Verarbeiten des intensitätsmodulierten, optischen Signals bereitgestellt wird, wobei die Übertragungseinheit (10, 12, 14, 16) so angeordnet ist, dass sie das optische Signal bereitstellt, das Licht mit einer Wellenlänge zwischen 1200 nm und 1400 nm und einer solchen optische Leistung umfasst, dass eine durch Modendispersion in der Faser (8) verursachte Impulsverbreiterung teilweise durch die optische Leistung kompensiert werden kann, wobei das optische Signal von der Empfangseinheit (20, 22, 24, 26) erkannt werden kann.

**11.** Verfahren nach Anspruch 10, bei dem das Bereitstellen einer mit einer Faser (8) des Netzwerks (1) verbundenen Übertragungseinheit (10, 12, 14, 16) das Anpassen einer Übertragungseinheit (10, 12, 14, 16) umfasst, die bereits mit dem Lichtwellenleiter-Netzwerk (1) verbunden ist.

12. Verfahren nach einem der Ansprüche 10 oder 11, das ferner den Schritt umfasst, bei dem ein mit der Übertragungseinheit (10, 12, 14, 16) übereinstimmendes Filter für die Zusammenwirkung mit dieser bereitgestellt wird, um das intensitätsmodulierte, optische Signal mit einer mathematischen Funktion zu falten, wobei die Funktion eine Umkehrfunktion einer Übertragungsfunktion der mindestens einen Faser (8) darstellt.

13. Lichtwellenleiter-Netzwerk (1) für eine Datenkommunikation bei einer Bitrate von mindestens 30 Gbps, mit einer Übertragungseinheit (10, 12, 14, 16), die so angeordnet ist, dass sie ein intensitätsmoduliertes, optisches Signal bereitstellt und die Intensität des optischen Signals moduliert, um die Bitrate von mindestens 30 Gbps für die Datenkommunikation bereitzustellen, wobei das Netzwerk (1) ferner mindestens eine auf 850 nm optimierte Multimode-Gradientenfaser (8) aufweist, die mit der Übertragungseinheit (10, 12, 14, 16) verbunden ist, um das intensitätsmodulierte, optische Signal zu übertragen, sowie eine Übertragungseinheit (10, 12, 14, 16), um das intensitätsmodulierte, optische Signal zu empfangen und zu verarbeiten, wobei die Übertragungseinheit (10, 12, 14, 16) so angeordnet ist, dass sie das optische Signal bereitstellt, das Licht mit einer Wellenlänge zwischen 1200 nm und 1400 nm und einer solchen optischen Leistung umfasst, dass eine durch Modendispersion in der Faser (8) verursachte Impulsverbreiterung für die Erkennung durch die Empfangseinheit (20, 22, 24, 26) durch die Ausgangsleistung kompensiert werden kann.

14. Lichtwellenleiter-Netzwerk (1) nach Anspruch 13, das ferner ein Filter zum Falten des intensitätsmodulierten, optischen Signals mit einer mathematischen Funktion aufweist, wobei die Funktion die Umkehrfunktion der Übertragungsfunktion der Faser (8) ist.

15. Übertragungseinheit (10, 12, 14, 16) zur Verwendung mit einem Lichtwellenleiter-Netzwerk (1) nach einem der Ansprüche 13 oder 14.

## Revendications

1. Procédé d'utilisation d'un réseau local de fibres optiques (1) permettant une communication de données, comprenant les étapes de fourniture d'un signal optique à modulation d'intensité à au moins une fibre multimode à gradient d'indice (8), optimisée à 850 nm dudit réseau de fibres optiques (1) au moyen d'une unité de transmission (10, 12, 14, 16) et de réception du signal optique à modulation d'intensité au moyen d'une unité de transmission (10, 12, 14, 16) qui est connectée à ladite fibre (8), dans lequel ladite unité de transmission (10, 12, 14, 16) module l'intensité du signal optique à modulation d'intensité fournissant un débit binaire d'au moins 30 Gbps pour ladite communication de données, **caractérisé en ce que**, la lumière permettant de fournir le signal optique à modulation d'intensité comprend une longueur d'onde entre 1 200 nm et 1 400 nm, et dans lequel la lumière a une puissance optique telle que l'élargissement d'impulsion provoqué par une dispersion modale dans la fibre (8) est partiellement compensé par la puissance optique, dans lequel ledit signal optique est reconnaissable par ladite unité de réception (20, 22, 24, 26).

2. Procédé selon la revendication 1, dans lequel la lumière permettant de fournir le signal optique à modulation d'intensité a une longueur d'onde entre 1 280 nm et 1 320 nm.

3. Procédé selon la revendication 2, dans lequel ladite longueur d'onde est sensiblement de 1 300 nm.

4. Procédé selon l'une quelconque des revendications précédentes, dans lequel l'intensité du signal optique à modulation d'intensité est modulée pour fournir un débit binaire pour ladite communication de données entre 38 Gbps et 42 Gbps.

5. Procédé selon la revendication 3, dans lequel l'intensité du signal optique à modulation d'intensité est modulée pour fournir un débit binaire pour ladite communication de données de sensiblement 40 Gbps.

6. Procédé selon l'une quelconque des revendications précédentes, dans lequel les données dans le signal à modulation d'intensité sont représentées par des bits formés par des impulsions d'intensité, et dans lequel le signal optique à modulation d'intensité est converti en un signal électrique après sa réception, le procédé comprenant en outre une étape de filtrage du signal électrique dans le but de compenser l'élargissement des impulsions d'intensité.

**7.** Procédé selon la revendication 6, dans lequel ladite étape de filtrage comprend une étape de convolution du signal optique de signal lumineux à modulation d'intensité avec une exigence en termes de fonction mathématique, laquelle fonction représente un inverse d'une fonction de transfert de ladite au moins une fibre (8).

**8.** Procédé selon l'une quelconque des revendications précédentes, dans lequel la puissance optique de ladite lumière permettant de fournir le signal optique à modulation d'intensité est comprise entre -6 dBm et +2 dBm.

**9.** Procédé selon l'une quelconque des revendications précédentes, dans lequel la fibre (8) a une largeur de bande modale qui est comprise entre 200 mHz.km et 6 000 MHz.km.

**10.** Procédé de modification d'un réseau local de fibres optiques Ethernet de 10 gigabits (1) dans le but d'adapter ledit réseau de fibres optiques (1) pour une communication de données à un débit binaire d'au moins 30 Gbps, comprenant les étapes de fourniture d'une unité de transmission (10, 12, 14, 16) connectée à une fibre multimode à gradient d'indice (8), optimisée à 850 nm dudit réseau (1), ladite unité de transmission (10, 12, 14, 16) étant conçue pour produire un signal optique à modulation d'intensité, et pour moduler l'intensité dudit signal optique fournissant ledit débit binaire d'au moins 30 Gbps pour ladite communication de données, et fournir une unité de transmission (10, 12, 14, 16) permettant de recevoir et traiter le signal optique à modulation d'intensité, dans lequel ladite unité de transmission (10, 12, 14, 16) est conçue pour fournir ledit signal optique comprenant une lumière ayant une longueur d'onde entre 1 200 nm et 1 400 nm et une puissance optique telle que l'élargissement d'impulsion provoqué par une dispersion modale dans la fibre (8) est partiellement compensable par la puissance optique, dans lequel ledit signal optique est reconnaissable par ladite unité de réception (20, 22, 24, 26).

**11.** Procédé selon la revendication 10, dans lequel la fourniture d'une unité de transmission (10, 12, 14, 16) connectée à une fibre (8) du réseau (1) comprend l'adaptation d'une unité de transmission (10, 12, 14, 16) qui est déjà connectée au réseau de fibres optiques (1).

**12.** Procédé selon l'une quelconque des revendications 10 ou 11, comprenant en outre l'étape de fourniture d'un filtre correspondant à ladite unité de transmission (10, 12, 14, 16), permettant d'interagir avec celle-ci, dans le but de réaliser la convolution du signal optique à modulation d'intensité avec une fonction mathématique, ladite fonction représentant un inverse d'une fonction de transfert de ladite au moins une fibre (8).

**13.** Réseau de fibres optiques (1) pour une communication de données à un débit binaire d'au moins 30 Gbps, comprenant une unité de transmission (10, 12, 14, 16) qui est conçue pour fournir un signal optique à modulation d'intensité, et pour moduler l'intensité dudit signal optique dans le but de fournir ledit débit binaire d'au moins 30 Gpbs pour ladite communication de données, ledit réseau (1) comprenant en outre au moins une fibre multimode à gradient d'indice (8), optimisée à 850 nm, connectée à ladite unité de transmission (10, 12, 14, 16) permettant de transmettre le signal optique à modulation d'intensité et une unité de transmission (10, 12, 14, 16) permettant de recevoir et de traiter le signal optique à modulation d'intensité, dans lequel ladite unité de transmission (10, 12, 14, 16) est conçue pour fournir ledit signal optique comprenant une lumière ayant une longueur d'onde entre 1 200 nm et 1 400 nm et une puissance optique telle que l'élargissement d'impulsion provoqué par une dispersion modale dans la fibre (8) est compensable par la puissance de sortie pour une reconnaissance par ladite unité de réception (20, 22, 24, 26).

**14.** Réseau de fibres optiques (1) selon la revendication 13, comprenant en outre un filtre pour réaliser la convolution du signal optique à modulation d'intensité avec une fonction mathématique, dans lequel ladite fonction est l'inverse de la fonction de transfert de la fibre (8).

**15.** Unité de transmission (10, 12, 14, 16) destinée à une utilisation avec un réseau de fibres optiques (1) selon l'une quelconque des revendications 13 et 14.

FIG.1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAO LIU.** Electronic Dispersion Compensation for 10 Gbps data transmission over multi-mode fibers. *Implementation of High Performance Circuits, Proceedings of the 2004 IEEE Dallas/CAS workshop, Richardson, TX, USA,* 27 September 2004, 159-162
- **M. DÜSER ; P. BAYVEL.** 2.5 Gbit/s transmission over 4.5 km of 62.5 $\mu$m multimode fibre using center launch technique. *Electronics Letters, IEE stevenage, GB,* 06 January 2000, vol. 36 (1), 57, 58
- **P. PEPELJUGOSKI.** Development of System Specification for Laser-Optimized 50-$\mu$m Multimode Fibre for Multigigabit Short-Wavelength LANs. *Journal of Lightwave Technology, IEEE service center, New York, NY, USA,* May 2003, vol. 21 (5), 1256-1275